(19) Europäisches Patentamt / European Patent Office / Office européen des brevets

(11) **EP 2 830 902 B1**

(12) **FASCICULE DE BREVET EUROPEEN**

(45) Date de publication et mention
de la délivrance du brevet:
**24.08.2016 Bulletin 2016/34**

(21) Numéro de dépôt: **13719917.0**

(22) Date de dépôt: **25.03.2013**

(51) Int Cl.:
*B60K 6/48* *(2007.10)*       *B60K 6/52* *(2007.10)*
*B60W 20/00* *(2016.01)*     *B60W 50/06* *(2006.01)*
*B60W 10/06* *(2006.01)*     *B60W 40/10* *(2012.01)*

(86) Numéro de dépôt international:
**PCT/FR2013/050632**

(87) Numéro de publication internationale:
**WO 2013/144492 (03.10.2013 Gazette 2013/40)**

(54) **PROCEDE DE CONTROLE DE MOTORISATION D'UN VEHICULE COMPRENANT AU MOINS DEUX MOTORISATIONS**

ANTRIEBSSTEUERUNGSVERFAHREN FÜR EIN FAHRZEUG MIT MINDESTENS ZWEI ANTRIEBSSYSTEMEN

DRIVE CONTROL METHOD FOR A VEHICLE COMPRISING AT LEAST TWO DRIVE SYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2012 FR 1252883**

(43) Date de publication de la demande:
**04.02.2015 Bulletin 2015/06**

(73) Titulaire: **PSA Peugeot Citroën Automobiles S.A. 78140 Velizy Villacoublay (FR)**

(72) Inventeurs:
• **MILHAU, Yohan**
  **F-78400 Chatou (FR)**
• **GALINAUD, Florian**
  **F-75013 Paris (FR)**

(56) Documents cités:
**EP-A1- 1 215 071        DE-A1- 10 229 036
DE-A1-102006 029 366    DE-A1-102008 000 629
FR-A1- 2 950 302**

**Description**

La présente invention concerne un procédé de contrôle de motorisation d'un véhicule comportant au moins deux systèmes de motorisation, ainsi qu'un véhicule mettant en oeuvre un tel procédé.

Certain types de véhicules comportent deux motorisations différentes entraînant un seul train de roues, ou les deux trains de roues, qui possèdent des caractéristiques de démarrage différentes. Ces deux motorisations peuvent dans certains cas de circulation, être mises à contribution toutes les deux pour délivrer un couple permettant de donner au véhicule l'accélération demandée par le conducteur.

En particulier, certains véhicules hybrides comportent un moteur thermique et une machine électrique de traction, reliés à des roues motrices, par des transmissions.

Dans le cas où le moteur thermique est relié aux roues motrices par une transmission automatisée, en particulier par une boîte de vitesses du type robotisé, un calculateur de contrôle de la chaîne de traction peut décider du démarrage de cette motorisation suivant différents paramètres, comme les demandes du conducteur, l'état du véhicule ou les conditions de roulage.

A partir d'un moteur thermique à l'arrêt, un certain temps est alors nécessaire avant d'obtenir le couple demandé sur les roues motrices, correspondant au démarrage de ce moteur, à l'engagement du rapport de la boîte de vitesses si aucun rapport n'est engagé, et à la fermeture de l'embrayage. Ce temps total d'obtention peut être égal à plusieurs dixièmes de seconde, ou même à plusieurs secondes.

Pour la machine électrique de traction, dans le cas où celle-ci est reliée en permanence aux roues motrices, on peut généralement obtenir très rapidement un couple sur ces roues. Par contre, dans le cas où la machine électrique est reliée aux roues motrices par une transmission comportant un système d'engagement automatisé de la liaison, comme un crabot, il faut aussi prévoir un temps d'engagement avant de pouvoir disposer du couple sur les roues.

On peut avoir des situations où en fonction des conditions de roulage, le véhicule étant entraîné par une première motorisation ne permettant pas à elle seule d'obtenir l'accélération du véhicule demandée par le conducteur, le calculateur de contrôle de ces motorisations doit alors démarrer la deuxième motorisation afin de générer le couple complémentaire nécessaire pour obtenir cette accélération.

On a alors suivant le type de motorisation un délai pour obtenir ce couple complémentaire, qui peut être désagréable pour le conducteur et les passagers, et qui peut aussi être inquiétant ou dangereux quand il y a une urgence pour délivrer l'accélération demandée.

Un type de véhicule hybride connu, présenté notamment par le document US-B1-6205379, comporte un moteur thermique équipé d'une transmission entraînant le train avant du véhicule, une machine électrique entraînant le train arrière, ainsi que des moyens de contrôle des couples respectifs délivrés par les deux motorisations, afin de coordonner ces couples pour éviter notamment des patinages de roues motrices.

Toutefois, ce véhicule ne comporte pas de moyen permettant d'anticiper un démarrage d'une motorisation comportant un certain temps de démarrage.

La présente invention a notamment pour but d'éviter ces inconvénients de la technique antérieure.

Elle propose à cet effet un procédé de contrôle de motorisation d'un véhicule comportant au moins deux motorisations pour la traction, une motorisation active, et une motorisation complémentaire comprenant dans un état désactivé un délai de préparation avant la délivrance d'un couple, caractérisé en ce que la motorisation active appliquant un couple sur les roues C2 permettant le roulage du véhicule, et la motorisation complémentaire étant désactivée, il calcule une accélération théorique du véhicule Aveh_théorique dépendant du couple appliqué C2 par cette motorisation active, de la vitesse du véhicule V, et de conditions de roulage F0, F1, F2, puis il la compare avec l'accélération réelle mesurée de ce véhicule Aveh_réelle, et dans le cas où il détecte un décalage supérieur à un seuil, il commande aussitôt une activation de la motorisation complémentaire.

Un avantage de ce procédé de contrôle de motorisation, est qu'il permet d'anticiper la demande d'un couple additionnel par la préparation de la motorisation complémentaire, pour répondre à des difficultés de roulage dues par exemple à un obstacle à franchir, à un glissement de roue ou à une pente particulière, en détectant au plus tôt par la comparaison de l'accélération théorique avec l'accélération réelle, un risque de problème causé par la motorisation active qui ne pourrait pas délivrer le couple nécessaire.

Le procédé de contrôle de motorisation selon l'invention peut en outre comporter une ou plusieurs des caractéristiques suivantes, qui peuvent être combinées entre elles.

Avantageusement, les conditions de roulage comportent des coefficients de loi de route F0, F1 et F2, qui donnent l'effort de résistance au roulement Cres calculé avec l'équation :

$$Cres = F0 + F1V + F2V^2 + Mveh \cdot g \cdot \sin(\text{atan } \alpha) \; ;$$

avec Mveh = masse du véhicule, g = accélération de la pesanteur, $\alpha$ = pente de la route, et V = vitesse véhicule.

Avantageusement, le procédé de contrôle calcule l'accélération théorique du véhicule avec l'équation :

$$Aveh\_théorique = R/Jtot \, (C2 - F0 - F1V - F2V^2 - Mveh \cdot g \cdot \sin(\text{atan } \alpha)) \, ;$$

avec R = rayon de la roue, Jtot = moment d'inertie de la roue.

Avantageusement, le procédé de contrôle calcule une enveloppe d'accélération Aveh_théorique du véhicule, correspondant à une certaine plage de pente de la route $\alpha$, puis compare l'accélération réelle mesurée Aveh_réelle, pour vérifier si elle est comprise dans cette enveloppe.

En particulier, le procédé de contrôle peut commander une activation de la motorisation complémentaire, pour appliquer sur les roues avec cette motorisation un couple C1 négatif.

L'invention a aussi pour objet un véhicule hybride comportant pour la traction au moins une motorisation active et une motorisation complémentaire, qui met en oeuvre un procédé de contrôle de motorisation réalisé selon l'une quelconque des caractéristiques précédentes.

Selon un mode de réalisation, la motorisation complémentaire comporte un moteur thermique relié à une transmission comprenant une boîte de vitesses du type robotisé, entraînant les roues avant de ce véhicule.

La motorisation active peut comporter une machine électrique entraînant les roues arrière de ce véhicule.

En particulier, la motorisation complémentaire peut comporter une transmission comprenant un rapport qui est engagé par un crabot.

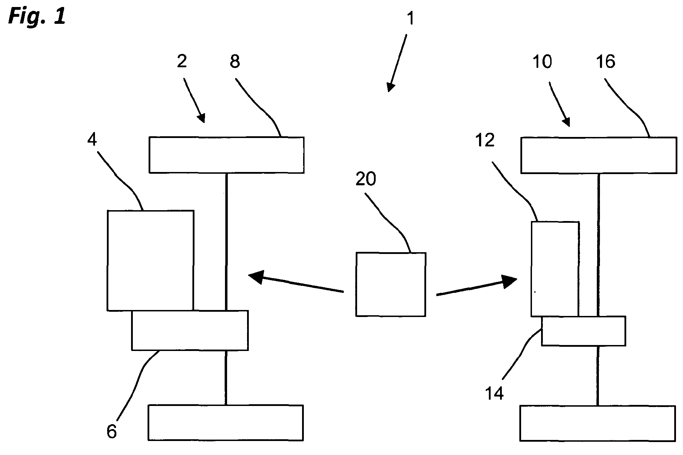

L'invention sera mieux comprise et d'autres caractéristiques et avantages apparaîtront plus clairement à la lecture de la description ci-après, donnée à titre d'exemple et de manière non limitative en référence au dessin de la figure 1, qui est un schéma d'un véhicule hybride disposant d'un moteur thermique et d'une machine électrique.

La figure 1 présente un véhicule hybride 1 comprenant un train avant 2 disposant d'un moteur thermique 4 relié à une transmission 6 comportant une boîte de vitesses du type robotisé. La transmission 6 comporte un différentiel de sortie, qui entraîne pas des arbres de roue les deux roues avant 8 de ce véhicule 1, pour délivrer un couple appliqué sur les roues C1.

Le véhicule hybride 1 comporte aussi un train arrière 10, disposant d'une machine électrique de traction 12 alimentée par des batteries, qui est reliée de manière permanente à une transmission 14 comprenant un différentiel de sortie entraînant par des arbres de roue les deux roues arrière 16 de ce véhicule, pour appliquer un couple sur les roues C2.

Un calculateur de contrôle de motorisation 20, reçoit des informations sur le fonctionnement des motorisations, notamment le couple qu'elles appliquent sur les roues, C1 pour le moteur thermique 4 et C2 pour la machine électrique 12, des informations sur le fonctionnement du véhicule, notamment son accélération réelle, ainsi que des informations sur les demandes du conducteur, notamment sa demande d'accélération représentée par l'enfoncement de la pédale d'accélérateur.

Le calculateur de contrôle 20 gère alors en fonction de ces différentes informations le démarrage des deux motorisations 4, 12, et la répartition du couple C1, C2 que chacune doit appliquer sur les roues 8, 16. La gestion de ces deux couples est effectuée pour répondre en particulier aux demandes du conducteur dans les meilleures conditions de sécurité et de confort, ainsi qu'à des impératifs de réduction de consommation et d'émission de gaz polluants.

Dans des circonstances particulières, le véhicule roulant avec un couple C2 sur les roues arrière 16 délivré par la machine électrique 12, et le moteur thermique 4 étant à l'arrêt avec sa boîte de vitesses 6 au point mort, on peut obtenir une accélération de ce véhicule qui ne correspond pas à la demande du conducteur.

Par exemple avec des roues du véhicule 1 se trouvant en appui sur un obstacle, comme une bordure de trottoir ou une forte pente, ou avec les roues motrices arrière 16 comportant une faible adhérence, l'accélération du véhicule peut ne pas être en rapport avec le couple délivré par la machine électrique. Ce problème peut venir d'une insuffisance de couple appliquée sur les roues C2 et délivré par la machine électrique 12, ou d'un manque de capacité de traction des roues arrière 16 du véhicule.

La situation peut être gênante, en particulier si le véhicule reste bloqué. Elle peut être aussi dangereuse, en particulier si la stabilité du véhicule est menacée.

D'une manière générale, la loi de route donne l'effort de résistance au roulement Cres d'un véhicule, correspondant au couple résistant appliqué sur la roue, suivant la formule :

$$(1) \quad Cres = F0 + F1V + F2V^2 + Mveh \cdot g \cdot \sin(\text{atan } \alpha)$$

Avec :

EP 2 830 902 B1

- F0 : Coefficient de la loi de route en N ;
- F1 : Coefficient de la loi de route en N/km.h ;
- F2 : Coefficient de la loi de route en N/(km.h$^2$) ;
- Mveh : Masse du véhicule en kg ;
- g : accélération de la pesanteur en 9.81 m/s$^2$ ;
- α : pente de la route en % ;
- V : Vitesse véhicule en km/h ;

Par ailleurs, l'équation dynamique du véhicule ramenée à la roue est la suivante :

$$(2) \qquad Aveh = R \, (d\omega roue \, / \, dt)$$

L'équation dynamique de la roue est la suivante :

$$(3) \qquad Jtot \, (d\omega roue \, / \, dt) = \Sigma \, Croue = C1 + C2 - Cres$$

Avec :

- Aveh : accélération véhicule en m/s$^2$ ;
- R : rayon de la roue en m ;
- ωroue : vitesse roue en rad/s ;
- Cres : Couple résistif à la roue en N ;
- Jtot = moment d'inertie de la chaîne cinématique ramené à la roue.

En considérant que le moteur thermique 4 est à l'arrêt, C1 est nul, et en regroupant les deux dernières équations (2) et (3), on obtient une accélération théorique du véhicule :

$$(4) \qquad Aveh\_théorique = R/Jtot \, (C2 - F0 - F1V - F2V^2 - Mveh \, . \, g \, . \, \sin(\text{atan } \alpha))$$

Pour le véhicule hybride 1, on peut en connaissant le couple de consigne C2 donné par le calculateur de contrôle des motorisations 20 à la machine électrique 12, et la vitesse mesurée V du véhicule, et en prenant en compte des coefficients de lois de route estimés F0, F1, F2, en déduire une enveloppe d'accélération Aveh_théorique de ce véhicule correspondant à une certaine plage de pente de la route.

Le procédé de contrôle de motorisation effectue périodiquement ce calcul d'enveloppe d'accélération du véhicule Aveh_théorique, puis compare l'accélération réelle mesurée de ce véhicule Aveh_réelle, pour vérifier si elle est comprise dans cette enveloppe.

Dès que le procédé détecte une accélération réelle mesurée Aveh_réelle qui n'est pas comprise dans l'enveloppe, il en déduit que le véhicule se trouve dans une situation anormale nécessitant un complément de couple. Le procédé demande alors immédiatement un démarrage du moteur thermique 4 et un engagement d'un rapport de la boîte de vitesses 6, pour préparer cette motorisation à délivrer au plus tôt un couple sur le train avant 2.

Le moteur thermique 4 se prépare en démarrant et en engageant un rapport de la transmission 6, pour suivant l'évolution des circonstances de roulage, en particulier si le problème de traction avec la machine électrique 12 seule entraînant le train arrière 10 se confirme, être prêt à appliquer un couple C1 sur le train avant 2.

Cet apport du couple C1 par le train avant 2 peut permettre de fournir au véhicule un couple global de traction plus important, si le problème venait d'un couple insuffisant C2 délivré par la machine électrique 12. Il peut aussi permettre d'améliorer la motricité du véhicule en apportant un couple sur le train avant 2, alors que le train arrière 10 comporte une adhérence insuffisante sur la route, pour réaliser un véhicule à quatre roues motrices.

Le procédé de contrôle de motorisation selon l'invention peut être facilement intégré dans un calculateur existant, en utilisant des capteurs déjà prévus dans le véhicule, ce qui représente une solution économique.

On notera que ce procédé de contrôle peut permettre de préparer une motorisation complémentaire comprenant différents types de technologies, qui comporte un certain délai de préparation avant la délivrance d'un couple. On peut l'utiliser notamment pour une machine électrique reliée à une transmission comportant des crabots d'engagement des rapports, qui doit d'abord synchroniser sa vitesse de rotation avant d'engager un crabot.

4

On notera aussi que suivant les besoins, cette motorisation complémentaire peut délivrer sur les roues un couple moteur, ou un couple de freinage s'il faut ralentir le véhicule, ou seulement un train roulant de ce véhicule.

**Revendications**

1. Procédé de contrôle de motorisation d'un véhicule comportant au moins deux motorisations pour la traction, une motorisation active (12), et une motorisation complémentaire (4) comprenant dans un état désactivé un délai de préparation avant la délivrance d'un couple, **caractérisé en ce que** la motorisation active (12) appliquant un couple C2 sur les roues permettant le roulage du véhicule, et la motorisation complémentaire (4) étant désactivée, il calcule une accélération théorique du véhicule Aveh_théorique dépendant du couple appliqué C2 par cette motorisation active (12), de la vitesse du véhicule V, et de conditions de roulage F0, F1, F2, puis il la compare avec l'accélération réelle mesurée de ce véhicule Aveh_réelle, et dans le cas où il détecte un décalage supérieur à un seuil, il commande aussitôt une activation de la motorisation complémentaire (4).

2. Procédé de contrôle de motorisation selon la revendication 1, **caractérisé en ce que** les conditions de roulage comportent des coefficients de loi de route F0, F1 et F2, qui donnent l'effort de résistance au roulement Cres calculé avec l'équation :

$$Cres = F0 + F1V + F2V^2 + Mveh \cdot g \cdot \sin(\text{atan } \alpha) ;$$

avec Mveh = masse du véhicule, g = accélération de la pesanteur, $\alpha$ = pente de la route, et V = vitesse véhicule.

3. Procédé de contrôle de motorisation selon la revendication 2, **caractérisé en ce qu'**il calcule l'accélération théorique du véhicule avec l'équation :

$$Aveh\_théorique = R/Jtot (C2 - F0 - F1V - F2V^2 - Mveh \cdot g \cdot \sin(\text{atan } \alpha)) ;$$

avec R = rayon de la roue, Jtot = moment d'inertie de la chaîne cinématique ramené à la roue.

4. Procédé de contrôle de motorisation selon la revendication 3, **caractérisé en ce qu'**il calcule une enveloppe d'accélération Aveh_théorique du véhicule, correspondant à une certaine plage de pente de la route $\alpha$, puis compare l'accélération réelle mesurée Aveh_réelle, pour vérifier si elle est comprise dans cette enveloppe.

5. Procédé de contrôle de motorisation selon l'une quelconque des revendications précédentes, **caractérisé en ce qu'**il commande une activation de la motorisation complémentaire (4), pour appliquer sur les roues avec cette motorisation un couple C1 négatif.

6. Véhicule hybride comportant pour la traction au moins une motorisation active (12) et une motorisation complémentaire (4), **caractérisé en ce qu'**il met en oeuvre un procédé de contrôle de motorisation réalisé selon l'une quelconque des revendications précédentes.

7. Véhicule hybride selon la revendication 6, **caractérisé en ce que** la motorisation complémentaire comporte un moteur thermique (4) relié à une transmission (6) comprenant une boîte de vitesses du type robotisé, entraînant les roues avant (2) de ce véhicule.

8. Véhicule hybride selon la revendication 7, **caractérisé en ce que** la motorisation active comporte une machine électrique (12) entraînant les roues arrière (10) de ce véhicule.

9. Véhicule hybride selon la revendication 6, **caractérisé en ce que** la motorisation complémentaire (4) comporte une transmission comprenant un rapport qui est engagé par un crabot.

**Patentansprüche**

1. Motorisierungssteuerungsverfahren eines Fahrzeugs, das mindestens zwei Motorisierungen für den Antrieb umfasst, eine aktive Motorisierung (12) und eine ergänzende Motorisierung (4), die in einem deaktivierten Zustand eine Vorbereitungszeit vor dem Abgeben eines Drehmoments umfasst, **dadurch gekennzeichnet, dass** die aktive Motorisierung (12) ein Drehmoment C2 auf den Rädern angelegt, das das Fahren des Fahrzeugs erlaubt, und die ergänzende Motorisierung (4) deaktiviert ist, eine theoretische Beschleunigung des Fahrzeugs Aveh_théorique berechnet, die von dem von dieser aktiven Motorisierung (12) angelegten Drehmoment C2, der Geschwindigkeit des Fahrzeugs V und den Fahrbedingungen F0, F1, F2 abhängt, sie dann mit der realen gemessenen Beschleunigung dieses Fahrzeugs Aveh_réelle vergleicht, und, falls es eine Verlagerung oberhalb eines Schwellenwerts erfasst, sofort eine Aktivierung der ergänzenden Motorisierung (4) steuert.

2. Motorisierungssteuerungsverfahren nach Anspruch 1, **dadurch gekennzeichnet, dass** die Fahrbedingungen Straßengesetzkoeffizienten F0, F1 und F2 umfassen, die die Fahrwiderstandskraft Cres geben, die mit folgender Formel berechnet ist:

$$\text{Cres = F0 + F1V + F2V}^2 \text{ + Mveh.g.sin(atan } \alpha),$$

wobei Mveh = Masse des Fahrzeugs, g = Gravitationsbeschleunigung, $\alpha$ = Gefälle der Straße und V = Fahrzeuggeschwindigkeit ist.

3. Motorisierungssteuerungsverfahren nach Anspruch 2, **dadurch gekennzeichnet, dass** es die theoretische Beschleunigung des Fahrzeugs mit folgender Gleichung berechnet:

$$\text{Aveh\_théorique = R/Jtot(C2 - F0 - F1V - F2V}^2 \text{ -}$$
$$\text{Mveh.g.sin(atan } \alpha)),$$

wobei R = Radius des Rads, Jtot = Trägheitsmoment der kinematischen Kette in Bezug auf das Rad ist.

4. Motorisierungssteuerungsverfahren nach Anspruch 3, **dadurch gekennzeichnet, dass** es eine Mantelbeschleunigung Aveh_théorique des Fahrzeugs berechnet, die einem bestimmten Gefällebereich $\alpha$ der Straße entspricht, dann die gemessene reale Beschleunigung Aveh_rélle vergleicht, um zu prüfen, ob sie innerhalb dieses Mantels liegt.

5. Motorisierungssteuerungsverfahren nach einem der vorhergehenden Ansprüche, **dadurch gekennzeichnet, dass** es eine Aktivierung der ergänzenden Motorisierung (4) steuert, um auf die Räder mit dieser Motorisierung ein negatives Drehmoment C1 anzulegen.

6. Hybridfahrzeug, das für den Antrieb mindestens eine aktive Motorisierung (12) und eine ergänzende Motorisierung (4) umfasst, **dadurch gekennzeichnet, dass** es ein Motorisierungssteuerungsverfahren umsetzt, das nach einem der vorhergehenden Ansprüche ausgeführt wird.

7. Hybridfahrzeug nach Anspruch 6, **dadurch gekennzeichnet, dass** die ergänzende Motorisierung eine Brennkraftmaschine (4) umfasst, die mit einem Getriebe (6) verbunden ist, das ein Schaltgetriebe des Robotertyps umfasst, das die Vorderräder (2) dieses Fahrzeugs antreibt.

8. Hybridfahrzeug nach Anspruch 7, **dadurch gekennzeichnet, dass** die aktive Motorisierung einen Elektromotor (12) umfasst, der die Hinterräder (10) dieses Fahrzeugs antreibt.

9. Hybridfahrzeug nach Anspruch 6, **dadurch gekennzeichnet, dass** die ergänzende Motorisierung (4) ein Getriebe umfasst, das einen Gang umfasst, der durch eine Klauenkupplung eingerückt wird.

**Claims**

1. A method for controlling the drive of a vehicle that has at least two drive systems for traction, an active drive system (12) and a complementary drive system (4) which, in a deactivated state, has a preparation lead-time before it can deliver a torque, **characterized in that** with the active drive system (12) applying a torque C2 to the wheels to allow the vehicle to drive along, and with the complementary drive system (4) deactivated, it calculates a theoretical acceleration of the vehicle A veh_theoretical, which is dependent on the torque C2 applied by this active drive system (12), on the speed of the vehicle V, and the driving conditions F0, F1, F2, then it compares this with the measured actual acceleration of this vehicle A veh_actual, and if it detects a discrepancy higher than a threshold value, it immediately commands activation of the complementary drive system (4).

2. The drive control method according to Claim 1, **characterized in that** the driving conditions comprise road law coefficients F0, F1 and F2, which give the resistance force to travel Cres, calculated with the equation:

$$\text{Cres = F0 + F1V + F2V}^2 \text{ + Mveh . g. sin(atan } \alpha);$$

with Mveh = mass of the vehicle, g = acceleration due to gravity, $\alpha$ = gradient of the road, and V = vehicle speed.

3. The drive control method according to Claim 2, **characterized in that** it calculates the theoretical acceleration of the vehicle with the equation:

$$\text{Aveh\_theoretical = R/Jtot (C2 – F0 – F1V – F2V}^2 \text{ – Mveh}$$
$$\text{. g . sin(atan } \alpha));$$

with R = radius of the wheel, Jtot = moment of inertia of the drive train brought to the wheel.

4. The drive control method according to Claim 3, **characterized in that** it calculates an acceleration envelope Aveh_theoretical of the vehicle, corresponding to a certain gradient range of the road $\alpha$, then compares the measured actual acceleration Aveh_actual, to verify if it is comprised in this envelope.

5. The drive control method according to any one of the preceding claims, **characterized in that** it commands an activation of the complementary drive system (4), to apply on the wheels with this drive system a negative torque C1.

6. A hybrid vehicle comprising for the traction at least one active drive system (12) and a complementary drive system (4), **characterized in that** it implements a drive control method realized according to any one of the preceding claims.

7. The hybrid vehicle according to Claim 6, **characterized in that** the complementary drive system comprises a combustion engine (4) connected to a transmission (6) including a gearbox of the automated type, driving the front wheels (2) of this vehicle.

8. The hybrid vehicle according to Claim 7, **characterized in that** the active drive system comprises an electric machine (12) driving the rear wheels (10) of this vehicle.

9. The hybrid vehicle according to Claim 6, **characterized in that** the complementary drive system (4) comprises a transmission including a ratio which is engaged by a dog clutch.

**Fig. 1**

**EP 2 830 902 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6205379 B1